# EUROPÄISCHE PATENTSCHRIFT

(11) **EP 2 857 172 B1**
(45) Veröffentlichungstag und Bekanntmachung des Hinweises auf die Patenterteilung: **01.03.2017**
(21) Anmeldenummer: 14187038.6
(22) Anmeldetag: 30.09.2014
(51) Int. Cl.: B29C 47/02, B29C 47/06, B29C 47/08, B29C 47/36, B29C 47/92, E06B 3/22, E06B 3/263, B29C 47/56, B29C 47/00

(54) **Verfahren und Vorrichtung zum Herstellen eines Strangpress-Profils aus nachwachsenden Rohstoffen**
Method and device for producing an extrusion profile from renewable raw materials
Procédé et dispositif de fabrication d'un profil d'extrusion en matière première renouvelable

(30) Priorität: 02.10.2013 AT 506382013
(43) Veröffentlichungstag der Anmeldung: 08.04.2015
(73) Patentinhaber: Plastounik, Günther, 9586 Fürnitz (AT)
(72) Erfinder: Plastounik, Günther, 9586 Fürnitz (AT)
(74) Vertreter: Weiser, Andreas

(56) Entgegenhaltungen:
- WO-A1-2008/025081
- WO-A2-2006/119229
- DE-A1- 19 530 270
- DE-U1-202009 000 042
- US-A- 5 104 305
- US-A- 5 700 555
- GOTTFRIED STEINER ET AL: "Exjection: Dem Spritzgießen um Längen voraus", KUNSTSTOFFE, Bd. 2008, Nr. 4, 30. April 2008 (2008-04-30), Seiten 51-55, XP055189095, München

## Beschreibung

Die vorliegende Erfindung betrifft ein Verfahren zum Herstellen eines Strangpress-Profils aus Fasern nachwachsender Rohstoffe. Die Erfindung betrifft ferner eine Vorrichtung zur Durchführung eines solchen Verfahrens.

Strangpress-Profile, die in einer Vielzahl von Anwendungen eingesetzt werden, z.B. als Fenster- oder Türprofile, werden meist als Hohlprofile aus Kunststoff, seltener als Vollprofile hergestellt. Vollprofile, z.B. das aus US 5 104 305 A bekannte zumindest zweischichtige Kunstharz-Vollprofil mit einer äußeren Hygieneschicht und einer in diese injizierten inneren Gasbarriere-Schicht oder das aus DE 195 30 270 A1 bekannte thermoplastische, Pflanzenfaser-verstärkte Vollprofil mit Kunststofffilmbeschichtung, sind materialintensiv und schwer, Hohlprofile hingegen für viele Anwendungen nicht ausreichend stabil; so kommt es insbesondere durch die geringe Torsionsfestigkeit häufig zum Bauteilversagen durch Biegedrillknicken, d.h. ein Knicken in Folge von Biegelast und Torsion. Um einem solchen Versagen vorzubeugen, werden die Profile vielfach mit Verstärkungsleisten, meist aus Metall, armiert oder, gemäß DE 20 2009 000 042 U1, Faserplatten-Bewehrungen in die Hohlprofile eingeschoben. Solche Leisten oder Bewehrungen verkomplizieren und verteuern die Herstellung der Profile, verschlechtern deren thermische Eigenschaften und Verarbeitbarkeit und verschärfen das bei aus Kunststoff hergestellten Profilen ohnehin bestehende Entsorgungsproblem.

Alternativ zur Metallarmierung können Profile z.B. mit Glas- oder Kohlefasern verstärkt werden. In diesem Fall unterliegen jedoch die Profil-Bearbeitungswerkzeuge einem hohen Verschleiß. Auch sind die Stäube von Glas- oder Kohlefasern gesundheitsschädlich. In der EP 0 902 148 A2 wird deshalb angeregt, in eine Polyester-Matrix Naturfasern anstelle von Glasfasern einzubinden.

Aber selbst faserverstärkte Strangpress-Profile erreichen nicht die in vielen Anwendungen geforderte Stabilität gegenüber Biegen und Torsion. Die Erfindung setzt sich zum Ziel, ein Verfahren zum Herstellen eines kostengünstigen, umweltfreundlichen Strangpress-Profils hoher Stabilität zu schaffen.

Dieses Ziel wird in einem ersten Aspekt der Erfindung mit einem Verfahren zum Herstellen eines Strangpress-Profils aus

Fasern nachwachsender Rohstoffe erreicht, wobei die Fasern in einer Aufbereitungseinheit mit Zusatzstoffen zu einem pastösen Faserfluid gemischt werden, umfassend
in einer ersten Phase zum Erzeugen eines segmentierten Kerns für das Profil:
- Versetzen eines in einer ersten Pressform verschieblichen Kolbens in eine erste, zurückgezogene Stellung,
- Einpressen von Faserfluid in die erste Pressform als Fasersegment,
- Zurückziehen des Kolbens entgegen der Strangpressrichtung von der ersten in eine zweite, weiter zurückgezogene Stellung und Ausfüllen des in der ersten Pressform zwischen Fasersegment und Kolben verbleibenden Raumes mit Füllstoff als Füllstoffsegment, und
- Aushärtenlassen des Füllstoffsegments; und
in einer zweiten Phase zum Erzeugen eines Mantels um den Kern:
- Vorschieben des Kolbens in Strangpressrichtung von der zweiten in eine dritte Stellung unter Vorschieben des erzeugten Kerns in eine zweite Pressform, wobei ein Umfangsspalt um den Kern verbleibt, und dabei
- Einpressen weiteren Faserfluids als Mantel in den Umfangsspalt.

Die Fasersegmente bilden dabei stabilisierende Querwandungen im Profil, die Torsion und Biegekräften entgegenwirken. So entsteht ein leichtes, stabiles Strangpress-Profil, das in Bezug auf seine Profilform keine Einschränkungen aufweist und im Vergleich zu herkömmlichen Hohlprofilen deutlich stabiler ist. Auch lässt sich ein besonders hoher Anteil an verrottbaren Naturfasern im Strangpress-Profil erzielen.

Besonders bevorzugt wird das Verfahren kontinuierlich durch Wiederholen der genannten Phasen bis zum Erreichen einer gewünschten Profillänge ausgeführt. Das Strangpress-Profil kann somit gleichsam endlos hergestellt und, wenn gewünscht, hinterher nach Maß abgelängt werden.

Günstig ist es, wenn vor dem Einpressen von Faserfluid in die erste Pressform diese gegenüber der zweiten Pressform durch einen Sperrschieber geschlossen wird, wobei das Faserfluid in den in der ersten Pressform zwischen Sperrschieber und Kolben verbleibenden Raum eingepresst wird, und wenn vor dem Vorschieben des Kolbens von der zweiten in die dritte Stellung der Sperrschieber geöffnet wird. Dadurch wird die erste Pressform beidseitig stabil abgeschlossen, sodass das Fasersegment in höherer Dichte hergestellt werden kann.

Besonders günstig ist es, wenn ferner das in die erste Pressform eingepresste Faserfluid zum Verdichten des Fasersegments vom Kolben kraftbeaufschlagt wird. Dadurch weist das Fasersegment eine höhere Festigkeit auf und überschüssige Zusatzstoffe werden aus dem Faserfluid herausgepresst, sodass das Fasersegment fester bzw. schneller härtend wird.

In einer vorteilhaften Ausführungsform der Erfindung umfassen die Zusatzstoffe ein selbsthärtendes oder UV-lichthärtbares Harz oder thermoplastische Fasern. So können die physikalischen und chemischen Eigenschaften des Strangpress-Profils über weite Bereiche an vorgesehene Anwendungen angepasst werden, und das Herstellverfahren kann durch Steuern des Aushärtens optimiert werden.

Um eine hohe Stabilität des Strangpress-Profils zu erzielen, ist es vorteilhaft, wenn die genannten Fasern aus einem oder mehreren der Rohstoffe Hanf, Flachs, Kokos, Bambus, Chinaschilf oder Zuckerrohr sind. Neben ihren günstigen mechanischen Eigenschaften sind diese Rohstoffe besonders einfach anwendbar, kostengünstig und einfach entsorgbar.

Um eine gezieltes, rasches Härten des Kerns zu erreichen, ist es besonders günstig, wenn das Fasersegment vor dem Zurückziehen des Kolbens bzw. der Füllstoff beim Aushärtenlassen bestrahlt und/oder beheizt oder gekühlt werden. Die Eigenschaften des Kerns sind dadurch gezielt beeinflussbar und das Herstellverfahren wird beschleunigt.

In einem zweiten Aspekt schafft die Erfindung eine Vorrichtung zum Herstellen eines Strangpress-Profils aus Fasern nachwachsender Rohstoffe, umfassend
eine Aufbereitungseinrichtung zum Mischen der Fasern mit Zusatzstoffen zu einem pastösen Faserfluid und ein davon gespeistes Presswerkzeug zum Formen des Profils,
wobei das Presswerkzeug eine erste Pressform zum Erzeugen eines segmentierten Kerns des Profils und eine an die erste Pressform anschließende zweite Pressform zum Erzeugen eines Mantels um den Kern umfasst,
die zweite Pressform einen gegenüber der ersten Pressform größeren Innenquerschnitt zum Bilden eines Umfangsspalts um den Kern hat,
in die erste Pressform und in den Umfangsspalt der zweiten Pressform jeweils die Aufbereitungseinrichtung und in die erste Pressform ferner zumindest eine Füllstoffdüse mündet, und
im Inneren der ersten Pressform ein längs der Strangpressrichtung verschieblicher Kolben gelagert ist, der die erste Pressform an der der zweiten Pressform abgewandten Seite abschließt, welcher Kolben zwischen einer ersten, zurückgezogenen Stellung zum Erzeugen eines Fasersegments, einer zweiten, weiter zurückgezogenen Stellung zum Erzeugen eines daran anschließenden Füllstoffsegments und einer dritten, vorgeschobenen Stellung zum Vorschieben des erzeugten Kerns von der ersten in die zweite Pressform verschieblich ist.

Bezüglich der Vorteile der erfindungsgemäßen Vorrichtung wird auf die vorangegangenen Ausführungen zum Verfahren verwiesen.

Besonders günstig ist es, wenn der Sperrschieber ein Drehschieber ist. Ein solcher Drehschieber ist nicht nur einfach in der Ansteuerung und stabil, sondern kann auch in einer Weise angeordnet werden, dass eine Reinigung seiner gerade nicht in Eingriff befindlichen Bereiche im laufenden Betrieb möglich ist, wodurch die Gefahr eines Verklebens oder Verstopfens reduziert wird.

Bevorzugt ist die Aufbereitungseinrichtung ein Schneckenförderer. Schneckenförderer sind vielfach erprobt, erlauben das kontinuierliche, gleichmäßige Aufbereiten und Mischen des Faserfluids und erzielen einen hohen Pressdruck.

Zur Steuerung des Verfahrens ist es günstig, wenn die Aufbereitungseinrichtung jeweils über sperrbare Ventile in die erste und die zweite Pressform mündet.

Zwar kann die zumindest eine Füllstoffdüse die Wandung der ersten Pressform durchsetzen, in einer vorteilhaften Ausführungsform der Erfindung ist jedoch der Kolben von der zumindest einen Füllstoffdüse, bevorzugt von einer Vielzahl von Füllstoffdüsen, durchsetzt. So kann der Füllstoff sofort beim Zurückziehen des Kolbens von der ersten in die zweite Stellung - unabhängig von der Dicke des Fasersegments - den verbleibenden Raum in der ersten Pressform ausfüllen. Dabei wird, insbesondere bei einer Vielzahl von Füllstoffdüsen, eine besonders gleichmäßige Verteilung und/oder eine gezielte Strukturierung des Füllstoffs erzielt.

Günstig ist ferner, wenn der Kolben zwei relativ zueinander bewegliche, übereinanderliegende Lochplatten aufweist, die zum Öffnen und Schließen der Füllstoffdüsen in und außer Fluchtung bringbar sind. Ein solcher Schließmechanismus erlaubt auf besonders einfache Weise die Doppelfunktion des Kolbens, der die erste Pressform abschließt und dennoch von den Füllstoffdüsen durchsetzt ist. Durch die Scherung bei der Relativbewegung der Lochplatten beim Öffnen und Schließen der Füllstoffdüsen wird ferner einer Verklebung der Düsen vorgebeugt.

Die Erfindung wird nachfolgend anhand eines in den beigeschlossenen Zeichnungen dargestellten Ausführungsbeispiels näher erläutert. In den Zeichnungen zeigen:
die Fig. 1a und 1b ein gemäß der vorliegenden Erfindung hergestelltes Strangpress-Profil in Perspektivansicht von schräg oben im Ganzen (Fig. 1a) bzw. teildurchsichtig (Fig. 1b); und
die Fig. 2 bis 5 eine erfindungsgemäße Vorrichtung zum Herstellen des Strangpress-Profils nach den Fig. 1a und 1b in verschiedenen Stadien des Verfahrens der Erfindung jeweils im Querschnitt.

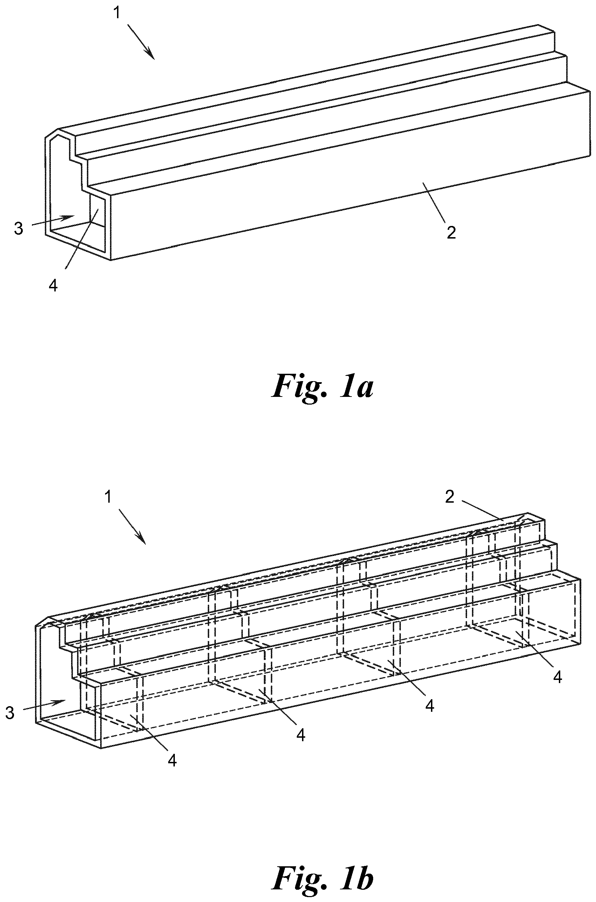

Das in den Fig. 1a und 1b dargestellte erfindungsgemäß hergestellte Strangpress-Profil 1 hat nicht nur einen Mantel 2, sondern weist in seinem Kern 3 ferner Querwandungen 4 zur Verstärkung auf, welche den Kern 3 segmentieren. Mantel 2 und Querwandungen 4 sind erfindungsgemäß aus Fasern nachwachsender Rohstoffe und können etwa gleiche oder auch wesentlich voneinander abweichende Wandstärken haben. Die Bereiche des Kerns 3 zwischen zwei Querwandungen 4 sind segmentweise mit Füllstoff ausgefüllt (in der Fig. 1a und 1b nicht erkennbar).

Es versteht sich, dass das Strangpress-Profil 1 beliebige Länge und Profilform haben kann. So kann es sich um ein Endlos-Profil handeln und der Mantel 2 kann im Querschnitt auch Hinterschneidungen und/oder Taschen aufweisen.

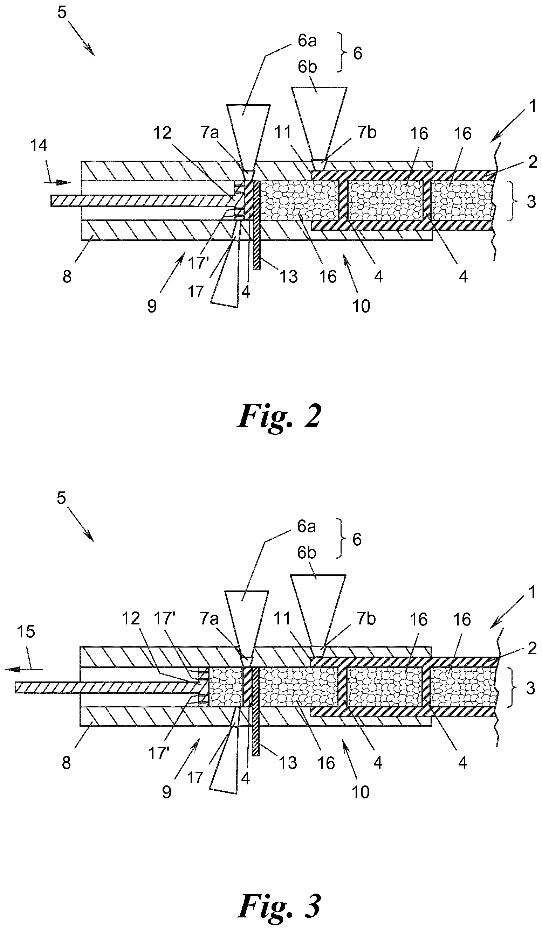

Anhand der Darstellungen in den Fig. 2 bis 5 wird das Verfahren zum Herstellen des Strangpress-Profils 1 von Fig. 1 nun näher erläutert.

Eine Vorrichtung 5 zum Herstellen des Profils 1 umfasst gemäß Fig. 2 eine Aufbereitungseinrichtung 6, die im dargestellten Ausführungsbeispiel in zwei Aufbereitungseinheiten 6a, 6b geteilt ist. Die Aufbereitungseinheiten 6a, 6b speisen über je ein sperrbares Ventil 7a, 7b ein Presswerkzeug 8 mit einem pastösen Faserfluid. Dazu mischen die Aufbereitungseinheiten 6a, 6b zunächst Fasern eines oder mehrerer verschiedener nachwachsender Rohstoffe, z.B. Hanf, Flachs, Kokos, Bambus, Chinaschilf oder Zuckerohr, mit Zusatzstoffen, z.B. selbsthärtendem oder lichthärtbarem, z.B. UV-lichthärtbarem, Harz, Zweikomponenten-Harz oder thermoplastischen Fasern.

Um ein besseres Vermischen der Fasern und Zusatzstoffe, eine höhere Haltbarkeit des Profils 1 und/oder eine gewünschte Fluidität zu erzielen, können die Aufbereitungseinheiten 6a, 6b ferner geheizt und/oder gekühlt sein und/oder es können weitere organische oder nicht-organische Zusatzstoffe, z.B. Härter, Bindemittel, Farbstoffe, Flammschutz, UV-Stabilisator etc., u.zw. in fester oder flüssiger Form, beigemengt werden.

Nach dem Aufbereiten des Faserfluids in den Aufbereitungseinheiten 6a, 6b pressen diese das Faserfluid unter Druck in das Presswerkzeug 8. Die Aufbereitungseinheiten 6a, 6b können dazu z.B. Schneckenförderer oder andere Fördersysteme oder Mischer sein, welche das aufbereitete Faserfluid direkt oder mit Hilfe einer zusätzlichen Presse in das Presswerkzeug 8 einpressen. Die Ventile 7a, 7b sind z.B. einfache Schiebeventile, könnten aber auch als Teller-, Kolben-, Nadel- oder Kugelventile ausgeführt sein.

Das Presswerkzeug 8 gibt dem Profil 1 die gewünschte Form. Dabei gibt das Presswerkzeug 8 nur den zweidimensionalen Querschnitt des Profils 1 vor; durch Verschieben des Profils 1 im Presswerkzeug 8 wird dieser Querschnitt über die gesamte Länge des hergestellten Profils 1 gleichartig erstreckt. Das fertig geformte Profil 1 wird dabei in Strangpressrichtung aus dem zu diesem Zweck einseitig offenen Presswerkzeug 8 gezogen oder geschoben (in den Fig. 2 bis 5 rechtsseitig) und nach Bedarf weiterverarbeitet.

Das Presswerkzeug 8 umfasst eine erste Pressform 9 zum Erzeugen des segmentierten Kerns 3 und eine an die erste Pressform 9 anschließende zweite Pressform 10 zum Erzeugen des Mantels 2 um den Kern 3. Dabei hat die zweite Pressform 10 einen gegenüber der ersten Pressform 9 größeren Innenquerschnitt und bildet dadurch einen Umfangsspalt 11 um den Kern 3.

Zum Herstellen des Profils 1 wird in einer ersten Phase des Verfahrens gemäß den Fig. 2 und 3 zunächst der segmentierte Kern 3 für das Profil 1 erzeugt. Dazu wird ein in der ersten Pressform 9 längs der Strangpressrichtung verschieblicher Kolben 12 in eine erste, um etwa die Wandstärke der zu fertigenden Querwandung 4 zurückgezogene Stellung versetzt, wie in Fig. 2 dargestellt. Der Kolben 12 schließt die erste Pressform 9 an der der zweiten Pressform 10 abgewandten Seite ab; ein Sperrschieber 13 schließt die erste Pressform 9 dabei an der der zweiten Pressform 10 zugewandten Seite ab.

Der Sperrschieber 13 kann ein Linear- oder Drehschieber und z.B. elektromechanisch oder hydraulisch betätigt sein; er könnte alternativ auch entfallen, in welchem Fall die erste Pressform 9 an der der zweiten Pressform zugewandten Seite durch das zuletzt erzeugte Segment des Kerns 3 abgeschlossen ist und nur bei Neustart des Verfahrens mit gereinigtem Presswerkzeug 8 an dieser Seite zunächst offen wäre.

Während oder nach dem Versetzen des Kolbens 12 in die erste Stellung (Fig. 2) wird Faserfluid aus der Aufbereitungseinrichtung 6, hier der Aufbereitungseinheit 6a, über das Ventil 7a in die erste Pressform 9, im Beispiel von Fig. 2 in den zwischen Sperrschieber 13 und Kolben 12 verbleibenden Raum, eingepresst und bildet dort als Fasersegment eine der Querwandungen 4 des segmentierten Kerns 3. Es versteht sich, dass die Aufbereitungseinheit 6a auch an mehreren z.B. über den Umfang der ersten Pressform 9 verteilten Stellen in diese münden kann.

Wenn gewünscht, kann das in die erste Pressform 9 eingepresste Faserfluid zum Verdichten des Fasersegments vom Kolben 12 kraftbeaufschlagt werden, wie dies Pfeil 14 in Fig. 2 symbolisiert. Auch kann das Fasersegment bestrahlt und/oder beheizt oder gekühlt werden, um sein Härten zu beschleunigen bzw. gezielt zu steuern. Die erste Pressform 9 ist in diesem Fall mit lichtdurchlässigen Fenstern für eine Bestrahlung mit Licht im Wellenlängenbereich von IR- bis UV-Licht und/oder Heiz- bzw. Kühlelementen ausgestattet.

Hierauf wird gemäß Fig. 3 der Kolben 12 entgegen der Strangpressrichtung weiter zurückgezogen (Pfeil 15) und der in der ersten Pressform 9 zwischen Fasersegment und Kolben 12 verbleibende Raum mit Füllstoff 16 fortschreitend ausgefüllt und so ein Füllstoffsegment des Kerns 3 erzeugt. Die in Fig. 3 nicht dargestellte, vollständig in Richtung des Pfeils 15 zurückgezogene ("zweite") Stellung des Kolbens 12 legt dabei die Länge des Füllstoffsegments im Kern 3 fest und kann dem jeweiligen Bedarf angepasst werden.

Der Füllstoff 16, z.B. ein PU- oder anderer Formschaum, ein Granulat oder eine extrudierte Struktur, wird über zumindest eine Füllstoffdüse 17, 17' zugeführt bzw. extrudiert, welche in die erste Pressform 9 mündet. Die Füllstoffdüse 17, 17' kann dabei einerseits als zumindest eine Füllstoffdüse 17 die Wandung des Presswerkzeugs 8 im Bereich der ersten Pressform 9 durchsetzen und/oder als zumindest eine Füllstoffdüse 17', bevorzugt als eine Vielzahl von Füllstoffdüsen 17', den Kolben 12 durchsetzen und wird jeweils von außerhalb des Presswerkzeugs 8 gespeist. Zum Öffnen und Schließen der Füllstoffdüsen 17' kann der Kolben 12 ferner, z.B. kopfseitig, zwei relativ zueinander bewegliche, übereinanderliegende Lochplatten aufweisen (nicht dargestellt), die in und außer Flucht bringbar sind. Dazu wird zumindest eine der Lochplatten, z.B. elektromechanisch oder hydraulisch, gegenüber der anderen Lochplatte verschoben oder verdreht. Eine der beiden Lochplatten könnte dabei durch den Kopf des Kolbens 12 selbst gebildet sein.

Das Füllstoffsegment des Kerns 3 wird daraufhin aushärten gelassen. Es kann dabei optional bestrahlt - z.B. lichtbestrahlt, insbesondere, wenn der Füllstoff 16 UV-lichthärtend ist, UV-bestrahlt - und/oder beheizt oder gekühlt werden.

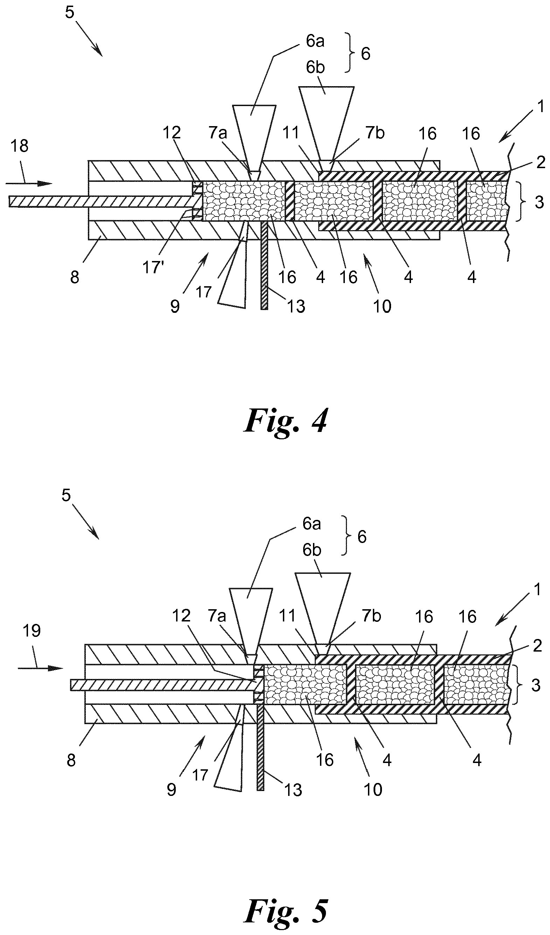

In einer zweiten Phase des Verfahrens gemäß den Fig. 4 und 5 wird der den Kern 3 umgebende Mantel 2 erzeugt. Dazu wird gegebenenfalls zunächst der Sperrschieber 13 geöffnet. Darauf wird der Kolben 12 gemäß Pfeil 18 von Fig. 4 in Strangpressrichtung von der zweiten in eine dritte, in Fig. 5 dargestellte Stellung vorgeschoben und zugleich der erzeugte Kern 3 in die zweite Pressform 10 vorgeschoben oder auch von der offenen Seite des Presswerkzeugs 8 her vorgezogen. Dabei wird von der Aufbereitungseinheit 6b über das Ventil 7b weiteres Faserfluid als Mantel 2 in den Umfangsspalt 11 um den Kern 3 eingepresst. Beim Einpressen kann das Faserfluid des Mantels 2 mit jenem der Fasersegmente des Kerns 3 eine Verbindung eingehen.

Das Faserfluid der in die zweite Pressform 10 mündenden Aufbereitungseinheit 6b kann gleich dem oder, wenn gewünscht, verschieden vom Faserfluid der Aufbereitungseinheit 6a sein.

Im Anschluss an das Presswerkzeug 8 kann eine - separate oder direkt angeschlossene - Kalibrier-, Kühl- und/oder Härtungseinrichtung zum Nachbearbeiten des Profils 1 bzw. seines Mantels 2 angeordnet sein, welche dem Profil 1 die gewünschte Güte und/oder Stabilität gibt.

Um ein Profil 1 größerer Länge herzustellen, werden die genannten Phasen des in den Fig. 2 bis 5 dargestellten Verfahrens bis zum Erreichen der gewünschten Profillänge beliebig oft wiederholt. So können auch Endlos-Profile 1 hergestellt werden, welche hinterher in an sich bekannter Weise in einem Querschneider nach Bedarf abgelängt werden.

Die Erfindung ist nicht auf die dargestellten Ausführungsformen beschränkt, sondern umfasst alle Varianten, Kombinationen und Modifikationen, die in den Rahmen der angeschlossenen Ansprüche fallen.

## Patentansprüche

1. Verfahren zum Herstellen eines Strangpress-Profils (1) aus Fasern nachwachsender Rohstoffe, wobei die Fasern in einer Aufbereitungseinheit (6) mit Zusatzstoffen zu einem pastösen Faserfluid gemischt werden, **gekennzeichnet durch**
in einer ersten Phase zum Erzeugen eines segmentierten Kerns (3) für das Profil (1):
- Versetzen eines in einer ersten Pressform (9) verschieblichen Kolbens (12) in eine erste, zurückgezogene Stellung,
- Einpressen von Faserfluid in die erste Pressform (9) als Fasersegment,
- Zurückziehen des Kolbens (12) entgegen der Strangpressrichtung von der ersten in eine zweite, weiter zurückgezogene Stellung und Ausfüllen des in der ersten Pressform (9) zwischen Fasersegment und Kolben (12) verbleibenden Raumes mit Füllstoff als Füllstoffsegment, und
- Aushärtenlassen des Füllstoffsegments; und
in einer zweiten Phase zum Erzeugen eines Mantels (2) um den Kern (3):
- Vorschieben des Kolbens (12) in Strangpressrichtung von der zweiten in eine dritte Stellung unter Vorschieben des erzeugten Kerns (3) in eine zweite Pressform (10), wobei ein Umfangsspalt (11) um den Kern (3) verbleibt, und dabei
- Einpressen weiteren Faserfluids als Mantel (2) in den Umfangsspalt (11).

2. Verfahren nach Anspruch 1, **gekennzeichnet durch** ein Wiederholen der genannten Phasen bis zum Erreichen einer gewünschten Profillänge.

3. Verfahren nach Anspruch 1 oder 2, **dadurch gekennzeichnet, dass** vor dem Einpressen von Faserfluid in die erste Pressform (9) diese gegenüber der zweiten Pressform (10) durch einen Sperrschieber (13) geschlossen wird, wobei das Faserfluid in den in der ersten Pressform (9) zwischen Sperrschieber (13) und Kolben (12) verbleibenden Raum eingepresst wird, und dass vor dem Vorschieben des Kolbens (12) von der zweiten in die dritte Stellung der Sperrschieber (13) geöffnet wird.

4. Verfahren nach einem der Ansprüche 1 bis 3, **dadurch gekennzeichnet, dass** das in die erste Pressform (9) eingepresste Faserfluid zum Verdichten des Fasersegments vom Kolben (12) kraftbeaufschlagt wird.

5. Verfahren nach einem der Ansprüche 1 bis 4, **dadurch gekennzeichnet, dass** die Zusatzstoffe ein selbsthärtendes oder UV-lichthärtbares Harz oder thermoplastische Fasern umfassen.

6. Verfahren nach einem der Ansprüche 1 bis 5, **dadurch gekennzeichnet, dass** die genannten Fasern aus einem oder mehreren der Rohstoffe Hanf, Flachs, Kokos, Bambus, Chinaschilf oder Zuckerrohr sind.

7. Verfahren nach einem der Ansprüche 1 bis 6, **dadurch gekennzeichnet, dass** das Fasersegment vor dem Zurückziehen des Kolbens (12) bestrahlt und/oder beheizt oder gekühlt wird.

8. Verfahren nach einem der Ansprüche 1 bis 7, **dadurch gekennzeichnet, dass** der Füllstoff beim Aushärtenlassen bestrahlt und/oder beheizt oder gekühlt wird.

9. Vorrichtung zum Herstellen eines Strangpress-Profils (1) aus Fasern nachwachsender Rohstoffe, umfassend eine Aufbereitungseinrichtung (6) zum Mischen der Fasern mit Zusatzstoffen zu einem pastösen Faserfluid und ein davon gespeistes Presswerkzeug (8) zum Formen des Profils (1), **dadurch gekennzeichnet, dass**
das Presswerkzeug (8) eine erste Pressform (9) zum Erzeugen eines segmentierten Kerns (3) des Profils (1) mit im Inneren der ersten Pressform (9) aushärtengelassenen Füllstoffsegmenten und eine an die erste Pressform (9) anschließende zweite Pressform (10) zum Erzeugen eines Mantels (2) um den Kern (3) umfasst,
wobei die zweite Pressform (10) einen gegenüber der ersten Pressform (9) größeren Innenquerschnitt zum Bilden eines Umfangsspalts (11) um den Kern (3) hat,
wobei in die erste Pressform (9) und in den Umfangsspalt (11) der zweiten Pressform (10) jeweils die Aufbereitungseinrichtung (6) und in die erste Pressform (9) ferner zumindest eine Füllstoffdüse (17, 17') mündet, und
wobei im Inneren der ersten Pressform (9) ein längs der Strangpressrichtung verschieblicher Kolben (12) gelagert ist, der die erste Pressform (9) an der der zweiten Pressform (10) abgewandten Seite abschließt, welcher Kolben (12) zwischen einer ersten, im Inneren der ersten Pressform (9) zurückgezogenen Stellung zum Erzeugen eines Fasersegments, einer zweiten, im Inneren der ersten Pressform (9) weiter zurückgezogenen Stellung zum Erzeugen eines daran anschließenden Füllstoffsegments und einer dritten, im Inneren der ersten Pressform (9) vorgeschobenen Stellung zum Vorschieben des erzeugten Kerns (3) von der ersten in die zweite Pressform (10) verschieblich ist.

10. Vorrichtung nach Anspruch 9, **dadurch gekennzeichnet, dass** die Vorrichtung (5) ferner einen Sperrschieber (13) zum Abschließen der ersten Pressform (9) an der der zweiten Pressform (10) zugewandten Seite umfasst, welcher zum Vorschieben des Kerns (3) von der ersten in die zweite Pressform (10) öffenbar ist.

11. Vorrichtung nach Anspruch 10, **dadurch gekennzeichnet, dass** der Sperrschieber (13) ein Drehschieber ist.

12. Vorrichtung nach einem der Ansprüche 9 bis 11, **dadurch gekennzeichnet, dass** die Aufbereitungseinrichtung (6) ein Schneckenförderer ist.

13. Vorrichtung nach einem der Ansprüche 9 bis 12, **dadurch gekennzeichnet, dass** die Aufbereitungseinrichtung (6) jeweils über sperrbare Ventile (7a, 7b) in die erste und die zweite Pressform (9, 10) mündet.

14. Vorrichtung nach einem der Ansprüche 9 bis 13, **dadurch gekennzeichnet, dass** der Kolben (12) von der zumindest einen Füllstoffdüse (17'), bevorzugt von einer Vielzahl von Füllstoffdüsen (17'), durchsetzt ist.

15. Vorrichtung nach Anspruch 14, **dadurch gekennzeichnet, dass** der Kolben (12) zwei relativ zueinander bewegliche, übereinanderliegende Lochplatten aufweist, die zum Öffnen und Schließen der Füllstoffdüsen (17') in und außer Fluchtung bringbar sind.

## Claims

1. A method for producing an extrusion moulding profile (1) from fibres of renewable raw material, wherein the fibres are mixed with additives in a preparation unit (6) to give a pasty fluid of fibres, **characterised in that**
in a first phase for generating a segmented core (3) for the profile (1) :
- displacing a piston (12) which is transposable in a first compression mould (9) into a first retracted position,
- pressing fluid of fibres into the first compression mould (9) as a fibre segment,
- retracting the piston (12) in the opposite direction of extrusion moulding from the first into a second further retracted position and filling the space remaining in the first compression mould (9) between fibre segment and piston (12) with filler material as a filler material segment, and
- allowing the filler material segment to cure, and
in a second phase for generating a mantle (2) around the core (3):
- advancing the piston (12) in the direction of extrusion moulding from the second into a third position while advancing the generated core (3) into a second compression mould (10), wherein a circumferential gap (11) around the core (3) remains, and while doing so
- pressing further fluid of fibres as a mantle (2) into the circumferential gap (11).

2. The method according to claim 1, **characterised by** a repetition of the said phases until reaching a desired length of the profile.

3. The method according to claim 1 or 2, **characterised in that** prior to pressing fluid of fibres into the first compression mould (9) this mould is closed towards the second compression mould (10) by means of a stop valve (13), wherein the fluid of fibres is pressed into the space in the first compression mould (9) remaining between stop valve (13) and piston (12), and **in that**, prior to advancing the piston (12) from the second into the third position, the stop valve (13) is opened.

4. The method according to any one of claims 1 to 3, **characterized in that** the fluid of fibres pressed into the first compression mould (9) is force-actuated by the piston (12) for densifying the fibre segment.

5. The method according to any one of claims 1 to 4, **characterized in that** the additives comprise a self-curing or ultraviolet light curable resin or thermoplastic fibres.

6. The method according to any one of claims 1 to 5, **characterized in that** the said fibres are made of one or more of the raw materials hemp, flax, coco, bamboo, silvergrass or sugar cane.

7. The method according to any one of claims 1 to 6, **characterized in that** the fibre segment is rayed and/or heated or cooled prior to retracting the piston (12).

8. The method according to any one of claims 1 to 7, **characterized in that** the filler material is rayed and/or heated or cooled when it is allowed to cure.

9. A device for producing an extrusion moulding profile (1) from fibres of renewable raw material, comprising a preparation unit (6) for mixing the fibres with additives to give a pasty fluid of fibres and a compression tool (8) fed therefrom for moulding the profile (1), **characterised in that**
the compression tool (8) comprises a first compression mould (9) for generating a segmented core (3) of the profile (1) having filler material segments which were allowed to cure inside the first compression mould (9) and, adjacent to the first compression mould (9), a second compression mould (10) for generating a mantle (2) around the core (3),
wherein the second compression mould (10) has an inner cross section which is larger compared to the first compression mould (9) for constituting a circumferential gap (11) around the core (3),
wherein the preparation unit (6) feeds into the first compression mould (9) and into the circumferential gap (11) of the second compression mould (10), respectively, and at least one filler nozzle (17, 17') also feeds into the first compression mould (9), and
wherein inside the first compression mould (9) a piston (12) is guided transposably along the direction of extrusion moulding, which piston secludes the first compression mould (9) on the side facing away from the second compression mould (10) and is transposable between a first position retracted inside the first compression mould (9) for generating a fibre segment, a second position further retracted inside the first compression mould (9) for generating a filler material segment subsequent thereto and a third position advanced inside the first compression mould (9) for advancing the generated core (3) from the first into the second compression mould (10).

10. The device according to claim 9, **characterised in that** the device (5) further comprises a stop valve (13) for closing the first compression mould (9) on the side facing the second compression mould (10), which stop valve can be opened for advancing the core (3) from the first into the second compression mould (10).

11. The device according to claim 10, **characterised in that** the stop valve (13) is a rotary valve.

12. The device according to any one of claims 9 to 11, **characterised in that** the preparation unit (6) is a screw conveyor.

13. The device according to any one of claims 9 to 12, **characterised in that** the preparation unit (6) feeds into the first and second compression mould (9, 10) via check valves (7a, 7b), respectively.

14. The device according to any one of claims 9 to 13, **characterised in that** the piston (12) is penetrated by the at least one filler nozzle (17'), preferably by a plurality of filler nozzles (17').

15. The device according to claim 14, **characterised in that** the piston (12) exhibits two perforated plates lying upon each other which are movable relative to each other and which can be brought to alignment and out of alignment for opening and closing the filler nozzles (17').

## Revendications

1. Procédé de fabrication d'un profil de moulage par extrusion (1) en fibres de ressource renouvelable, où les fibres sont mélangées dans une unité de préparation (6) avec des additifs pour donner un fluide pâteux de fibres, **caractérisé par**
dans une première phase, pour la création d'un noyau (3) segmenté pour le profil (1) :
- la mise en place d'un piston (12) coulissant dans un premier moule de pression (9) dans une première position en retrait,
- la pression du fluide de fibre dans le premier moule de pression (9) en tant qu'un segment de fibres,
- le retrait du piston (12) dans la direction opposée par rapport à la direction de moulage par extrusion, de la première dans une seconde position plus en retrait, et le remplissage de l'espace restant dans le premier moule de pression (9) entre le segment de fibres et le piston (12) avec de la matière de remplissage en tant qu'un segment de matière de remplissage, et
- le permis de durcir du segment de matière de remplissage ; et
dans une deuxième phase, pour la création d'une enveloppe (2) autour du noyau (3) :
- l'avancée du piston (12) dans la direction de moulage par extrusion de la deuxième vers une troisième position, en poussant, dans un deuxième moule de pression (10), le noyau (3) créé, où il reste une fente périphérique (11) autour du noyau (3), et ce faisant
- la pression d'autre fluide de fibres servant d'enveloppe (2) dans la fente périphérique (11).

2. Procédé selon la revendication 1, **caractérisé par** une répétition des phases citées jusqu'à avoir atteint une longueur de profil souhaitée.

3. Procédé selon la revendication 1 ou 2, **caractérisé en ce qu'**avant la pression de fluide de fibres dans le premier moule de pression (9), celui-ci est fermé en regard du deuxième moule de pression (10) par une vanne d'arrêt (13), où le fluide de fibres est pressé dans le premier moule de pression (9) dans l'espace restant entre la vanne d'arrêt (13) et le piston (12), et qu'avant l'avancée du piston (12) de la deuxième vers la troisième position, la vanne d'arrêt (13) est ouvert.

4. Procédé selon l'une des revendications 1 à 3, **caractérisé en ce que** le fluide de fibres pressé dans le premier moule de pression (9) est soumis à une force du piston (12) pour densifier le segment de fibres.

5. Procédé selon l'une des revendications 1 à 4, **caractérisé en ce que** les additifs comprennent une résine s'auto-durcissant ou durcissable à la lumière UV ou des fibres thermoplastiques.

6. Procédé selon l'une des revendications 1 à 5, **caractérisé en ce que** lesdites fibres sont d'une ou de plusieurs parmi les matières premières chanvre, lin, coco, bambou, roseau de Chine ou canne à sucre.

7. Procédé selon l'une des revendications 1 à 6, **caractérisé en ce que** le segment de fibres est soumis à un rayonnement et/ou est chauffé ou refroidi avant le retrait du piston (12).

8. Procédé selon l'une des revendications 1 à 7, **caractérisé en ce que** la matière de remplissage est soumise à un rayonnement, et/ou est chauffée ou refroidie lors du permis de durcir.

9. Dispositif pour la fabrication d'un profil de moulage par extrusion (1) en fibres de ressource renouvelable, comprenant une unité de préparation (6) pour le mélange des fibres avec des additifs pour donner un fluide pâteux de fibres et un outil de pression (8) alimenté par celle-ci pour la formation du profil (1), **caractérisé en ce que**
l'outil de pression (8) comprend un premier moule de pression (9) pour la création d'un noyau (3) segmenté du profil (1) avec des segment de matière de remplissage permis de durcir à l'intérieur du premier moule de pression (9) et un deuxième moule de pression (10), adjacent du premier moule de pression (9), pour la création d'une enveloppe (2) entourant le noyau (3),
où le deuxième moule de pression (10) a une section transversale interne plus grande par rapport au premier moule de pression (9) pour la formation d'une fente périphérique (11) autour du noyau (3),
où débouchent l'unité de préparation (6) dans le premier moule de pression (9) et dans la fente périphérique (11) du deuxième moule de pression (10), respectivement, et au moins une buse de matière de remplissage (17, 17'), en outre, dans le premier moule de pression (9), et
où, à l'intérieur du premier moule de pression (9), est logé un piston (12) coulissant le long de la direction de moulage par extrusion, qui ferme le premier moule de pression (9) du côté opposé au deuxième moule de pression (10), lequel piston (12) peut coulisser entre une première position en retrait à l'intérieur du premier moule de pression (9) pour la création d'un segment de fibres, une deuxième position plus en retrait à l'intérieur du premier moule de pression (9) pour la création d'un segment de matière de remplissage qui est subséquent, et une troisième position avancée à l'intérieur du premier moule de pression (9) pour la poussée du noyau (3) créé du premier dans le deuxième moule de pression (10).

10. Dispositif selon la revendication 9, **caractérisé en ce que** le dispositif (5) comprend en outre une vanne d'arrêt (13) pour la fermeture du premier moule de pression (9) du côté opposé au deuxième moule de pression (10), laquelle peut être ouverte pour l'avancée du noyau (3) du premier vers le deuxième moule de pression (10).

11. Dispositif selon la revendication 10, **caractérisé en ce que** la vanne d'arrêt (13) est une vanne rotative.

12. Dispositif selon l'une des revendications 9 à 11, **caractérisé en ce que** l'unité de préparation (6) est un convoyeur à vis.

13. Dispositif selon l'une des revendications 9 à 12, **caractérisé en ce que** l'unité de préparation (6) débouche respectivement dans le premier et dans le deuxième moule de pression (9, 10) par l'intermédiaire de saupapes (7a, 7b) pouvant être fermées.

14. Dispositif selon l'une des revendications 9 à 13, **caractérisé en ce que** le piston (12) est traversé par l'au moins une buse de matière de remplissage (17'), de préférence, par une multitude de buses de matière de remplissage (17').

15. Dispositif selon la revendication 14, **caractérisé en ce que** le piston (12) présente deux plaques à trous mobiles l'une par rapport à l'autre, situées l'une sur l'autre, qui peuvent être mises en alignement et en désalignement pour l'ouverture et la fermeture des buses de matière de remplissage (17').
